# EUROPÄISCHE PATENTANMELDUNG

(11) **EP 4 329 170 A1**
(43) Veröffentlichungstag der Anmeldung: **28.02.2024**
(21) Anmeldenummer: 22192418.6
(22) Anmeldetag: 26.08.2022
(51) Int. Cl.: H02M 1/00, H02M 3/335, H02M 1/44

(54) **STEUERN EINES DUAL-ACTIVE-BRIDGE GLEICHSPANNUNGSWANDLERS**

(71) Anmelder: Siemens Aktiengesellschaft, 80333 München (DE)
(72) Erfinder: Kucka, Jakub, 91052 Erlangen (DE)
(74) Vertreter: Siemens Patent Attorneys

(57) **Zusammenfassung**

Die Erfindung betrifft ein Verfahren zum Steuern eines Dual-Active-Bridge Gleichspannungswandlers (1) mit zwei von jeweils vier Schaltgliedern (S1 bis S8) gebildeten H-Brücken (H1, H2). Bei dem Verfahren wird eine zwischen drei voneinander verschiedenen Spannungswerten wechselnde Brückenspannung (v1, v2) jeder H-Brücke (H1, H2) durch Einschalten und Ausschalten jeweils verschiedener Schaltglieder (S1 bis S8) erzeugt, wobei wenigstens ein Spannungswert wenigstens einer H-Brücke (H1, H2) mit nur höchstens einem eingeschalteten Schaltglied (S1 bis S8) der H-Brücke (H1, H2) bei ausgeschalteten anderen Schaltgliedern (S1 bis S8) der H-Brücke (H1, H2) erzeugt wird.

## Beschreibung

Die Erfindung betrifft die Steuerung eines Dual-Active-Bridge Gleichspannungswandlers.

Genauer betrifft die Erfindung einen Dual-Active-Bridge Gleichspannungswandler, der zwei von jeweils vier Schaltgliedern gebildete H-Brücken aufweist, die elektrisch miteinander gekoppelt sind. Typischerweise sind die H-Brücken induktiv gekoppelt über einen Transformator mit zwei Spulen, die jeweils in dem Brückenzweig einer der H-Brücken angeordnet sind. Ein derartiger Gleichspannungswandler ermöglicht einen bidirektionalen Energietransport zwischen den beiden H-Brücken. Die Schaltglieder werden dabei typischerweise jeweils von einem Bipolartransistor mit isolierter Gate-Elektrode (engl. Insulated-Gate Bipolar Transistor, abgekürzt IGBT) mit einer dazu antiparallel geschalteten Diode oder einem Metalloxid-Halbleiter-Feldeffekttransistor(engl. Metal Oxide Semiconductor Field-Effect Transistor, abgekürzt MOSFET) gebildet.

Im Betrieb eines Dual-Active-Bridge Gleichspannungswandlers werden die Schaltglieder der H-Brücken moduliert angesteuert, das heißt Schaltglieder werden ein- und ausgeschaltet, so dass eine Brückenspannung jeder H-Brücke zwischen drei voneinander verschiedenen Spannungswerten wechselt. Jedoch können parasitäre Eigenschaften des Gleichspannungswandlers, die beispielsweise durch Schaltverluste beim Ein- und Ausschalten der Schaltglieder entstehen, dazu führen, dass die tatsächlichen Wellenformen der wechselnden Brückenspannungen von den erwünschten, theoretisch berechneten Wellenformen signifikant abweichen. Dies kann die Charakteristik der Energieübertragung zwischen den Brückenzweigen nachteilig beeinflussen. Insbesondere kann dies dazu führen, dass kurzzeitig ein Energiefluss in einer unerwünschten Richtung erfolgt, wodurch ungünstige Schaltbedingungen für die Schaltglieder verursacht werden. Letzteres kann die Effizienz des Dual-Active-Bridge Gleichspannungswandlers signifikant beeinträchtigen.

Der Erfindung liegt die Aufgabe zugrunde, die Steuerung eines Dual-Active-Bridge Gleichspannungswandlers zu verbessern.

Die Aufgabe wird erfindungsgemäß durch ein Verfahren mit den Merkmalen des Anspruchs 1 und einen Dual-Active-Bridge Gleichspannungswandler mit den Merkmalen des Anspruchs 11 gelöst.

Vorteilhafte Ausgestaltungen der Erfindung sind Gegenstand der Unteransprüche.

Bei dem erfindungsgemäßen Verfahren zum Steuern eines Dual-Active-Bridge Gleichspannungswandlers mit zwei von jeweils vier Schaltgliedern gebildeten H-Brücken wird eine zwischen drei voneinander verschiedenen Spannungswerten wechselnde Brückenspannung jeder H-Brücke durch Einschalten und Ausschalten jeweils verschiedener Schaltglieder erzeugt, wobei wenigstens ein Spannungswert wenigstens einer H-Brücke mit nur höchstens einem eingeschalteten Schaltglied der H-Brücke bei ausgeschalteten anderen Schaltgliedern der H-Brücke erzeugt wird.

Erfindungsgemäß werden also die verschiedenen Spannungswerte der Brückenspannungen eines Dual-Active-Bridge Gleichspannungswandlers mit zwei H-Brücken, die jeweils vier Schaltglieder aufweisen, erzeugt, wobei wenigstens ein Spannungswert wenigstens einer H-Brücke durch Einschalten nur höchstens eines Schaltgliedes der H-Brücke erzeugt wird. Demgegenüber werden bei einem herkömmlichen Verfahren die verschiedenen Spannungswerte der Brückenspannungen erzeugt, indem jeweils zwei Schaltglieder jeder H-Brücke eingeschaltet und die anderen beiden Schaltglieder jeder H-Brücke ausgeschaltet werden, wobei jeweils ein Schaltglied jeder Halbbrücke einer H-Brücke eingeschaltet und das andere Schaltglied der Halbbrücke ausgeschaltet wird.

Das erfindungsgemäße Verfahren hat gegenüber dem herkömmlichen Verfahren den Vorteil, dass durch das Einschalten nur höchstens eines Schaltgliedes einer H-Brücke in mindestens einem Schaltzustand ein in dem Brückenzweig der H-Brücke fließender Brückenstrom seine Stromrichtung in diesem Schaltzustand nicht ändern kann, da alle anderen Schaltglieder der H-Brücke ausgeschaltet sind und dadurch eine Änderung der Stromrichtung verhindert wird. Dadurch erfordert das erfindungsgemäße Verfahren weniger präzise Kenntnis parasitärer Parameter des Gleichspannungswandlers, so dass diese Parameter nicht vorher aufwändig bestimmt und berücksichtigt werden müssen. Dies spart Zeit und Kosten bei der Produktion und Inbetriebnahme des Gleichspannungswandlers. Außerdem kann dies die Effektivität des erfindungsmäßen Verfahrens gegenüber einem herkömmlichen Verfahren der Steuerung des Gleichspannungswandlers erhöhen, da das erfindungsmäße Verfahren weniger anfällig für Fehler bei der Charakterisierung parasitärer Parameter ist. Des Weiteren vereinfacht das erfindungsmäße Verfahren aus den genannten Gründen die Bestimmung der Schaltzeiten für das Schalten der Schaltglieder.

Bei einer Ausgestaltung der Erfindung wird jeder Spannungswert einer H-Brücke mit mindestens einem eingeschalteten Schaltglied der H-Brücke bei ausgeschalteten anderen Schaltgliedern der H-Brücke erzeugt. Diese Ausgestaltung berücksichtigt, dass sich herausgestellt hat, dass ein Schaltzustand, bei dem alle Schaltglieder ausgeschaltet sind, tendenziell sehr kurze Schaltimpulse für einzelne Schaltglieder und dadurch bewirkte höhere Schaltverluste verursachen kann.

Bei einer weiteren Ausgestaltung der Erfindung hängt für jeden Spannungswert einer H-Brücke, der mit nur einem eingeschalteten Schaltglied erzeugt wird, das jeweils eingeschaltete Schaltglied von einer Stromrichtung eines durch den Brückenzweig der jeweiligen H-Brücke fließenden Brückenstroms ab. Diese Ausgestaltung der Erfindung berücksichtigt, dass eine mit nur höchstens einem Schaltglied erzeugbare Brückenspannung einer H-Brücke von der Stromrichtung eines durch den Brückenzweig der H-Brücke fließenden Brückenstroms abhängt, so dass diese Stromrichtung bei der Auswahl des Schaltgliedes für die Erzeugung der jeweiligen Brückenspannung berücksichtigt werden muss.

Bei einer weiteren Ausgestaltung der Erfindung wird die Brückenspannung einer H-Brücke zwischen verschiedenen Spannungswerten derart geändert, dass die Änderungen der Brückenspannung eine Änderung der Schaltzustände von möglichst wenigen Schaltgliedern der H-Brücke erfordern. Diese Ausgestaltung der Erfindung zielt auf eine Minimierung der Schaltverluste beim Ändern der Schaltzustände durch eine Minimierung der Anzahl der Schaltzustände, die geändert werden müssen. Konkret wird dies erreicht, indem redundante Schaltzustände geeignet gewählt werden und eine geeignete Sequenz aufeinander folgender Schaltzustände gewählt wird.

Bei einer weiteren Ausgestaltung der Erfindung weist jedes Schaltglied einen Bipolartransistor mit isolierter Gate-Elektrode (IGBT) und eine dazu antiparallel geschaltete Diode auf. Alternativ weist jedes Schaltglied beispielsweise einen Metalloxid-Halbleiter-Feldeffekttransistor (MOSFET) auf. Diese Ausgestaltungen der Erfindung berücksichtigen, dass sich Schaltglieder mit IGBTs und MOSFETs besonders für die Realisierung eines Dual-Active-Bridge Gleichspannungswandlers eignen.

Bei einer weiteren Ausgestaltung der Erfindung ist in dem Brückenzweig jeder H-Brücke eine Spule angeordnet und die Spulen der beiden Brückenzweige sind Spulen eines Transformators. Dies ermöglicht vorteilhaft eine induktive Kopplung der H-Brücken des Gleichspannungswandlers.

Bei einer weiteren Ausgestaltung der Erfindung wird jeder Spannungswert einer der beiden H-Brücken mit nur höchstens einem eingeschalteten Schaltglied der H-Brücke bei ausgeschalteten anderen Schaltgliedern der H-Brücke erzeugt. Diese Ausgestaltung der Erfindung sieht also vor, alle Spannungswerte einer der beiden H-Brücken mit jeweils nur höchstens einem eingeschalteten Schaltglied der H-Brücke zu erzeugen.

Bei einer weiteren Ausgestaltung der Erfindung wird wenigstens ein Spannungswert jeder H-Brücke mit nur höchstens einem eingeschalteten Schaltglied der H-Brücke bei ausgeschalteten anderen Schaltgliedern der H-Brücke erzeugt. Diese Ausgestaltung der Erfindung sieht also vor, für beide H-Brücken jeweils mindestens einen Schaltzustand mit nur höchstens einem eingeschalteten Schaltglied der H-Brücke zu erzeugen.

Bei einer weiteren Ausgestaltung der Erfindung wird wenigstens ein Spannungswert einer H-Brücke mit nur höchstens einem eingeschalteten Schaltglied der H-Brücke bei ausgeschalteten anderen Schaltgliedern der H-Brücke erzeugt, und alle Spannungswerte der anderen H-Brücke werden jeweils mit zwei eingeschalteten Schaltgliedern der anderen H-Brücke bei ausgeschalteten anderen Schaltgliedern der anderen H-Brücke erzeugt. Diese Ausgestaltung der Erfindung sieht also vor, nur für eine Halbbrücke mindestens einen Schaltzustand durch Einschalten höchstens eines Schaltglieds der Halbbrücke zu erzeugen, während die andere Halbbrücke konventionell betrieben wird.

Ein erfindungsgemäßer Dual-Active-Bridge Gleichspannungswandler umfasst dementsprechend zwei von jeweils vier Schaltgliedern gebildete H-Brücken und eine Steuereinheit, die eingerichtet ist, die Schaltglieder gemäß dem erfindungsgemäßen Verfahren anzusteuern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen Schaltplan eines Ausführungsbeispiels eines Dual-Active-Bridge Gleichspannungswandlers,
- FIG 2: Verläufe einer Brückenspannung und eines Brückenstroms einer H-Brücke eines Dual-Active-Bridge Gleichspannungswandlers bei Verwendung eines herkömmlichen Verfahrens zum Steuern des Gleichspannungswandlers,
- FIG 3: Verläufe einer Brückenspannung und eines Brückenstroms einer H-Brücke eines Dual-Active-Bridge Gleichspannungswandlers bei Verwendung eines erfindungsgemäßen Verfahrens zum Steuern des Gleichspannungswandlers.

Einander entsprechende Teile sind in den Figuren mit denselben Bezugszeichen versehen.

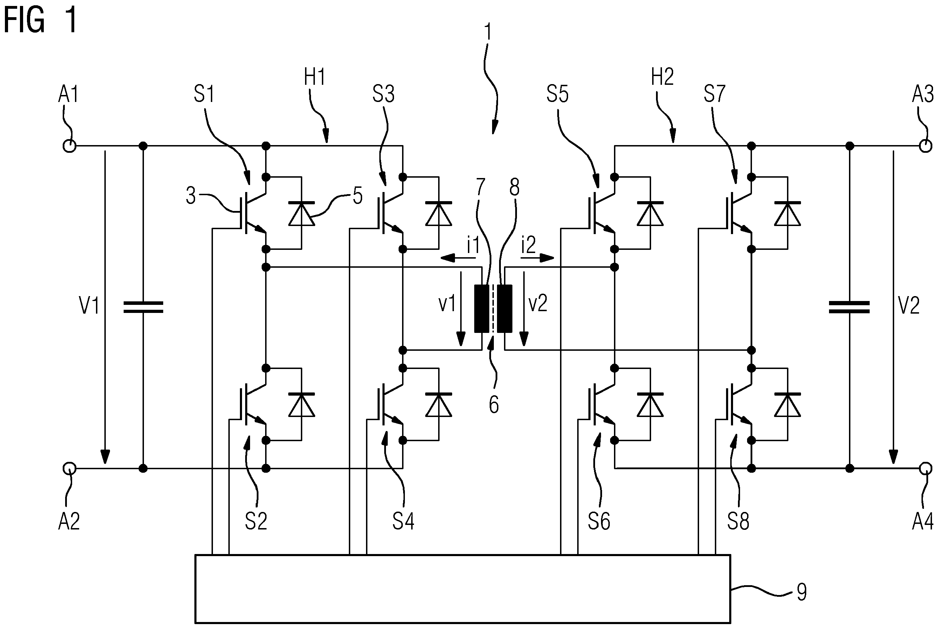

FIG 1 zeigt einen Schaltplan eines Ausführungsbeispiels eines Dual-Active-Bridge Gleichspannungswandlers 1. Der Gleichspannungswandler 1 umfasst eine erste H-Brücke H1 und eine zweite H-Brücke H2.

Die erste H-Brücke H1 weist vier Schaltglieder S1 bis S4 auf. Die Schaltglieder S1 und S2 bilden eine erste Halbbrücke der H-Brücke H1, die Schaltglieder S3 und S4 bilden eine zweite Halbbrücke der H-Brücke H1. Entsprechend weist die zweite H-Brücke H2 vier Schaltglieder S5 bis S8 auf. Die Schaltglieder S5 und S6 bilden eine erste Halbbrücke der H-Brücke H2, die Schaltglieder S7 und S8 bilden eine zweite Halbbrücke der H-Brücke H2. Jedes Schaltglied S1 bis S8 umfasst einen IGBT 3 mit einer dazu antiparallel geschalteten Diode 5.

Die beiden H-Brücken H1 und H2 sind galvanisch voneinander getrennt, aber durch einen Transformator 6 induktiv gekoppelt. Der Transformator 6 umfasst eine erste Spule 7, die in dem Brückenzweig der ersten H-Brücke H1 angeordnet ist, und eine zweite Spule 8, die in dem Brückenzweig der zweiten H-Brücke H2 angeordnet ist.

Ferner weist der Gleichspannungswandler 1 eine Steuereinheit 9 auf, die eingerichtet ist, die Schaltglieder S1 bis S8 in einer unten näher beschriebenen Weise anzusteuern, das heißt verschiedene aufeinander folgende Schaltzustände der Schaltglieder S1 bis S8 zu erzeugen, in denen jeweils bestimmte Schaltglieder S1 bis S8 eingeschaltet und die anderen Schaltglieder S1 bis S8 ausgeschaltet sind. Dabei wird der Schaltzustand eines Schaltgliedes S1 bis S8 durch eine zwischen dem Gateanschluss und dem Emitteranschluss des IGBT 3 des Schaltgliedes S1 bis S8 angelegte Gate-Emitter-Spannung beeinflusst. Ein Schaltglied S1 bis S8 wird eingeschaltet, indem der IGBT 3 des Schaltgliedes S1 bis S8 durch die Gate-Emitter-Spannung in einen Durchlassbetrieb versetzt wird, und ausgeschaltet, indem der IGBT 3 des Schaltgliedes S1 bis S8 durch die Gate-Emitter-Spannung in einen Sperrbetrieb versetzt wird.

Die erste H-Brücke H1 weist zwei Anschlüsse A1, A2 auf, zwischen denen im Betrieb des Gleichspannungswandlers 1 eine erste Gleichspannung V1 anliegt. In Abhängigkeit von den Schaltzuständen der Schaltglieder S1 bis S4 weist die H-Brücke H1 eine Brückenspannung v1 auf, die an dem Brückenzweig der H-Brücke H1 abfällt. In dem Brückenzweig der H-Brücke H1 fließt ein elektrischer Brückenstrom i1, dessen Richtung von den Schaltzuständen der Schaltglieder S1 bis S8 abhängt. Entsprechendes gilt für die zweite H-Brücke H2 mit einer Gleichspannung V2, die zwischen Anschlüssen A3, A4 der H-Brücke H2 anliegt, einer Brückenspannung v2, die an dem Brückenzweig der H-Brücke H2 abfällt, und einem elektrischen Brückenstrom i2, dessen Richtung von den Schaltzuständen der Schaltglieder S1 bis S8 abhängt.

Üblicherweise werden die Schaltglieder S1 bis S8 derart durch die Steuereinheit 9 angesteuert, dass in jedem Schaltzustand des Gleichspannungswandlers 1 die beiden Schaltglieder S1 bis S8 der beiden Halbbrücken jeder H-Brücke H1, H2 voneinander verschiedene Schaltzustände aufweisen. Mit dem Schaltzustand des Gleichspannungswandlers 1 wird dabei die Gesamtheit der Schaltzustände der einzelnen Schaltglieder S1 bis S8 bezeichnet. Die folgende Tabelle zeigt die dabei verwendeten Schaltzustände der Schaltglieder S1 bis S4 der H-Brücke H1:

| Zustandsname | Schaltzustände | Brückenspannung |
|---|---|---|
| POS | Sl=ein, S3=aus | v1=+V1 |
| | S2=aus, S4=ein | |
| NEG | Sl=aus, S3=ein | v1=-V1 |
| | S2=ein, S4=aus | |
| ZERO+ | Sl=ein, S3=ein | v1=0 |
| | S2=aus, S4=aus | |
| ZERO- | Sl=aus, S3=aus | v1=0 |
| | S2=ein, S4=ein | |

Hierbei bedeutet beispielsweise Sl=ein, dass das Schaltglied S1 eingeschaltet ist, und S1=aus bedeutet, dass das Schaltglied S1 ausgeschaltet ist. Entsprechendes gilt für die anderen Schaltglieder S2 bis S4. Die Schaltzustände der Schaltglieder S1 bis S4 der H-Brücke H1 werden in aufeinander folgenden Schaltzyklen derart geändert, dass die Brückenspannung v1 in jedem Schaltzyklus beispielsweise von v1=-V1 zu v1=0, danach von v1=0 zu v1=+V1, danach von v1=+V1 zu v1=0 und danach von v1=0 zu v1=-V1 geändert wird. Entsprechend werden üblicherweise die Schaltglieder S5 bis S8 der H-Brücke H2 geschaltet.

Ein Ausführungsbeispiel des erfindungsgemäßen Verfahrens sieht dagegen vor, die Brückenspannungen v1=-V1, v1=0 und v1=+V1 der H-Brücke H1 nur jeweils mit höchstens einem eingeschalteten Schaltglied S1 bis S4 der H-Brücke H1 bei ausgeschalteten anderen Schaltgliedern S1 bis S4 der H-Brücke H1 zu erzeugen. Die dabei verwendeten Schaltzustände der Schaltglieder S1 bis S4 hängen von der Richtung des Brückenstroms i1 in dem Brückenzweig der H-Brücke H1 ab. Die folgende Tabelle zeigt diese Schaltzustände der Schaltglieder S1 bis S4 der H-Brücke H1 in Abhängigkeit von der Richtung des Brückenstroms i1:

| Zustandsname | Schaltzustände | Brückenspannung |
|---|---|---|
| ALL_OFF | S1=aus, S3=aus | v1=+V1 wenn i1>0 |
| | S2=aus, S4=aus | v1=-V1 wenn i1<0 |
| S1_ON | S1=ein, S3=aus | v1=+V1 wenn i1>0 |
| | S2=aus, S4=aus | v1=0 wenn i1<0 |
| S2_ON | S1=aus, S3=aus | v1=0 wenn i1>0 |
| | S2=ein, S4=aus | v1=-V1 wenn i1<0 |
| S3_ON | S1=aus, S3=ein | v1=0 wenn i1>0 |
| | S2=aus, S4=aus | v1=-V1 wenn i1<0 |
| S4_ON | S1=aus, S3=aus | v1=+V1 wenn i1>0 |
| | S2=aus, S4=ein | v1=0 wenn i1<0 |

Im Folgenden wird angenommen, dass die H-Brücke H1 die "gleichrichtende Seite" des Gleichspannungswandlers 1 ist und die H-Brücke H2 die "wechselrichtende Seite" des Gleichspannungswandlers 1 ist.

Die Schaltzustände der Schaltglieder S1 bis S4 der H-Brücke H1 werden wiederum derart geändert, dass die Brückenspannung v1 in jedem Schaltzyklus beispielsweise von v1=-V1 zu v1=0, danach von v1=0 zu v1=+V1, danach von v1=+V1 zu v1=0 und danach von v1=0 zu v1=-V1 geändert wird. Im Unterschied zu dem üblicherweise verwendeten Verfahren werden dafür jedoch nicht die Schaltzustände POS, NEG, ZERO+ und ZERO- verwendet, sondern die Schaltzustände ALL_OFF, S1_ON, S2_ON, S3_ON und S4_ON.

Vorzugsweise wird dabei der Schaltzustand ALL_OFF nicht verwendet, weil er tendenziell sehr kurze Schaltimpulse für einzelne Schaltglieder S1 bis S4 und dadurch bewirkte höhere Schaltverluste verursachen kann. Ferner wird die Brückenspannung v1 der H-Brücke H1 vorzugsweise derart geändert, dass die Änderungen der Brückenspannung v1 eine Änderung der Schaltzustände von möglichst wenigen Schaltgliedern S1 bis S4 der H-Brücke H1 erfordern. Alternativ oder zusätzlich werden redundante Schaltzustände ALL_OFF, S1_ON, S2_ON, S3_ON und S4_ON beispielsweise derart gewählt, dass die Schaltglieder S1 bis S4 jeweils möglichst lange ununterbrochen eingeschaltet und möglichst lange ununterbrochen ausgeschaltet bleiben, und/oder dass die Schaltglieder S1 bis S4 möglichst gleiche Schaltverluste haben.

Die Schaltglieder S5 bis S8 der zweiten H-Brücke H2 werden beispielsweise konventionell geschaltet, wobei in jedem Schaltzustand der zweiten H-Brücke H2 genau zwei Schaltglieder S5 bis S8 eingeschaltet sind.

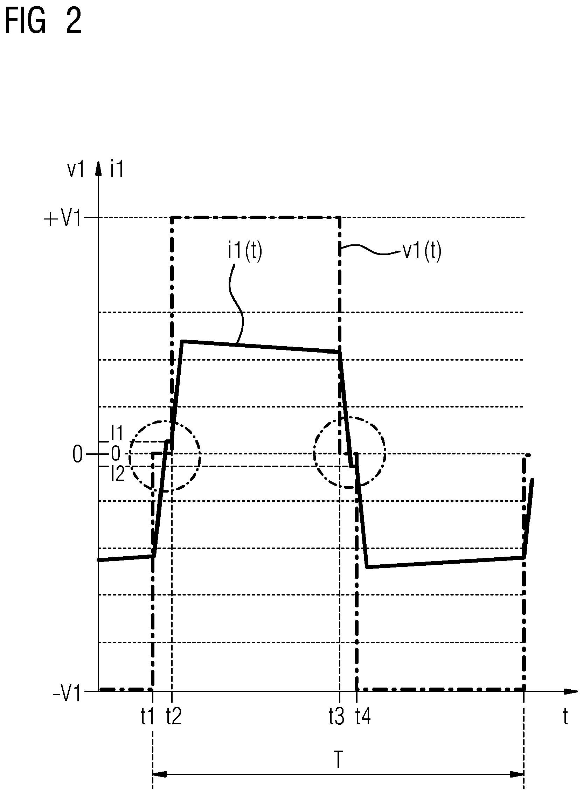

FIG 2 zeigt das Ergebnis einer Simulation von Verläufen v1(t) und i1(t) der Brückenspannung v1 und des Brückenstroms i1 der H-Brücke H1 in Abhängigkeit von der Zeit t bei Anwesenheit von Verlusten während eines Schaltzyklus T, wenn die Schaltglieder S1 bis S4 gemäß dem herkömmlichen Verfahren mit den Schaltzuständen POS, NEG, ZERO+ und ZERO- geschaltet werden.

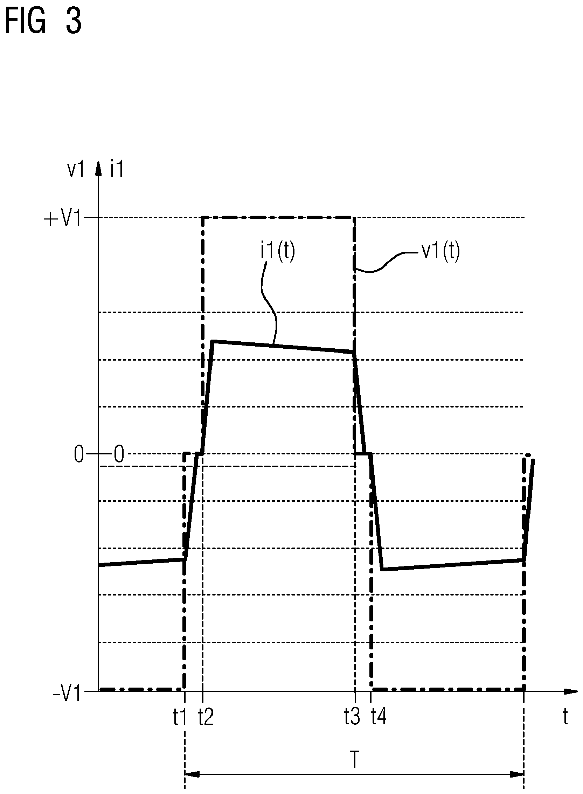

FIG 3 zeigt das Ergebnis einer analogen Simulation der Verläufe v1(t) und i1(t) der Brückenspannung v1 und des Brückenstroms i1 der H-Brücke H1 bei Anwesenheit von Verlusten während eines Schaltzyklus T, wobei die Schaltglieder S1 bis S4 jedoch gemäß dem erfindungsgemäßen Verfahren mit den Schaltzuständen S1_ON, S2_ON, S3_ON, S4_ON geschaltet werden.

Zu einem Zeitpunkt t1 wird die Brückenspannung v1 von v1=-V1 auf v1=0 erhöht. Zu einem Zeitpunkt t2 wird die Brückenspannung v1 von v1=0 auf v1=+V1 erhöht. Zu einem Zeitpunkt t3 wird die Brückenspannung v1 von v1=+V1 auf v1=0 verringert. Zu einem Zeitpunkt t4 wird die Brückenspannung v1 von v1=0 auf v1=-V1 verringert.

FIG 2 zeigt, dass der Brückenstrom i1 bei dem herkömmlichen Verfahren in dem Zeitintervall [t1,t2] auf einen Stromwert I1>0 ansteigt statt wie bei einem idealen (erwünschten) Schaltverhalten nur auf den Wert i1=0. In dem Zeitintervall [t3,t4] fällt der Brückenstrom i1 bei dem herkömmlichen Verfahren auf einen Stromwert I2<0 statt wie bei einem idealen Schaltverhalten auf den Wert i1=0 (siehe die eingekreisten Bereiche in FIG 2). FIG 3 zeigt, dass der Brückenstrom i1 bei dem erfindungsgemäßen Verfahren dagegen in dem Zeitintervall [t1,t2] nur auf den Wert i1=0 ansteigt und in dem Zeitintervall [t3,t4] nur auf den Wert i1=0 fällt. Der Grund dafür ist, dass bei dem erfindungsgemäßen Verfahren der Brückenstrom i1 in einem definierten Schaltzustand der H-Brücke H1 mit genau einem eingeschalteten Schaltglied S1 bis S4 seine Richtung nicht ändern kann. Das erfindungsgemäße Verfahren realisiert daher ein Schaltverhalten, das dem idealen Schaltverhalten näher kommt als das herkömmliche Verfahren.

Das oben beschriebene Verfahren kann in verschiedener Weise abgewandelt werden. Beispielsweise kann vorgesehen sein, nur mindestens einen der Schaltzustände POS, NEG, ZERO+ und ZEROder H-Brücke H1 durch einen korrespondierenden Schaltzustand ALL_OFF, S1_ON, S2_ON, S3_ON zu ersetzen. Beispielsweise kann dabei vorgesehen sein, die Schaltzustände POS und/oder NEG jeweils durch den Schaltzustand ALL OFF zu ersetzen oder die Schaltzustände POS und/oder NEG weiterhin konventionell durch Einschalten von zwei Schaltgliedern S1 bis S4 zu erzeugen. Ferner kann vorgesehen sein, zusätzlich oder alternativ zum Erzeugen von Schaltzuständen der H-Brücke H1 durch Einschalten nur jeweils eines Schaltgliedes S1 bis S4, konventionelle Schaltzustände der H-Brücke H2 durch entsprechende Schaltzustände der Schaltglieder S5 bis S8 zu ersetzen, bei denen jeweils nur höchstens ein Schaltglied S5 bis S8 eingeschaltet ist. Dabei werden vorzugsweise nur die konventionellen Schaltzustände ZERO+ und/oder ZERO- der Schaltglieder S5 bis S8 durch korrespondierende Schaltzustände mit nur einem eingeschalteten Schaltglied S5 bis S8 ersetzt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Steuern eines Dual-Active-Bridge Gleichspannungswandlers (1) mit zwei von jeweils vier Schaltgliedern (S1 bis S8) gebildeten H-Brücken (H1, H2),
- wobei eine zwischen drei voneinander verschiedenen Spannungswerten wechselnde Brückenspannung (v1, v2) jeder H-Brücke (H1, H2) durch Einschalten und Ausschalten jeweils verschiedener Schaltglieder (S1 bis S8) erzeugt wird,
- wobei wenigstens ein Spannungswert wenigstens einer H-Brücke (H1, H2) mit nur höchstens einem eingeschalteten Schaltglied (S1 bis S8) der H-Brücke (H1, H2) bei ausgeschalteten anderen Schaltgliedern (S1 bis S8) der H-Brücke (H1, H2) erzeugt wird.

2. Verfahren nach Anspruch 1, wobei jeder Spannungswert einer H-Brücke (H1, H2) mit mindestens einem eingeschalteten Schaltglied (S1 bis S8) der H-Brücke (H1, H2) bei ausgeschalteten anderen Schaltgliedern (S1 bis S8) der H-Brücke (H1, H2) erzeugt wird.

3. Verfahren nach Anspruch 1 oder 2, wobei für jeden Spannungswert einer H-Brücke (H1, H2), der mit nur einem eingeschalteten Schaltglied (S1 bis S8) erzeugt wird, das jeweils eingeschaltete Schaltglied (S1 bis S8) von einer Stromrichtung eines durch den Brückenzweig der jeweiligen H-Brücke (H1, H2) fließenden Brückenstroms (i1) abhängt.

4. Verfahren nach einem der vorhergehenden Ansprüche, wobei die Brückenspannung (v1, v2) einer H-Brücke (H1, H2) zwischen verschiedenen Spannungswerten derart geändert wird, dass die Änderungen der Brückenspannung (v1, v2) eine Änderung der Schaltzustände von möglichst wenigen Schaltgliedern (S1 bis S8) der H-Brücke (H1, H2) erfordern.

5. Verfahren nach einem der vorhergehenden Ansprüche, wobei jedes Schaltglied (S1 bis S8) einen Bipolartransistor mit isolierter Gate-Elektrode und eine dazu antiparallel geschaltete Diode aufweist.

6. Verfahren nach einem der Ansprüche 1 bis 4, wobei jedes Schaltglied (S1 bis S8) einen Metalloxid-Halbleiter-Feldeffekttransistor aufweist.

7. Verfahren nach einem der vorhergehenden Ansprüche, wobei in dem Brückenzweig jeder H-Brücke (H1, H2) eine Spule (7, 8) angeordnet ist und die Spulen (7, 8) der beiden Brückenzweige Spulen eines Transformators (6) sind.

8. Verfahren nach einem der vorhergehenden Ansprüche, wobei jeder Spannungswert einer der beiden H-Brücken (H1, H2) mit nur höchstens einem eingeschalteten Schaltglied (S1 bis S8) der H-Brücke (H1, H2) bei ausgeschalteten anderen Schaltgliedern (S1 bis S8) der H-Brücke (H1, H2) erzeugt wird.

9. Verfahren nach einem der vorhergehenden Ansprüche, wobei wenigstens ein Spannungswert jeder H-Brücke (H1, H2) mit nur höchstens einem eingeschalteten Schaltglied (S1 bis S8) der H-Brücke (H1, H2) bei ausgeschalteten anderen Schaltgliedern (S1 bis S8) der H-Brücke (H1, H2) erzeugt wird.

10. Verfahren nach einem der Ansprüche 1 bis 8, wobei wenigstens ein Spannungswert einer H-Brücke (H1, H2) mit nur höchstens einem eingeschalteten Schaltglied (S1 bis S8) der H-Brücke (H1, H2) bei ausgeschalteten anderen Schaltgliedern (S1 bis S8) der H-Brücke (H1, H2) erzeugt wird und alle Spannungswerte der anderen H-Brücke (H1, H2) jeweils mit zwei eingeschalteten Schaltgliedern (S1 bis S8) der anderen H-Brücke (H1, H2) bei ausgeschalteten anderen Schaltgliedern (S1 bis S8) der anderen H-Brücke (H1, H2) erzeugt werden.

11. Dual-Active-Bridge Gleichspannungswandler (1), umfassend
- zwei von jeweils vier Schaltgliedern (S1 bis S8) gebildete H-Brücken (H1, H2) und
- eine Steuereinheit (9), die eingerichtet ist, die Schaltglieder (S1 bis S8) gemäß dem Verfahren nach einem der vorhergehenden Ansprüche anzusteuern.
